# FASCICULE DE BREVET EUROPEEN

(11) **EP 1 276 815 B1**
(45) Date de publication et mention de la délivrance du brevet: **24.08.2005**
(21) Numéro de dépôt: 01923785.8
(22) Date de dépôt: 10.04.2001
(51) Int. Cl.: C08L 77/00, C08L 55/02, C08L 51/04

(54) **COMPOSITIONS POLYMERIQUES THERMOPLASTIQUES**
THERMOPLASTISCHE POLYMERISCHE MISCHUNGEN
THERMOPLASTIC POLYMERIC COMPOSITIONS

(30) Priorité: 12.04.2000 FR 0004696
(43) Date de publication de la demande: 22.01.2003
(73) Titulaire: Rhodia Engineering Plastics SA, 69192 Saint-Fons-Cedex (FR)
(72) Inventeur: PARK, Jung Hoon, Dongan-ku, Anyang-si, Kyungki-do 431-708 (KR); YU, Yeong-Chool, Seoul (KR)
(74) Mandataire: Esson, Jean-Pierre
(86) Numéro de dépôt international: PCT/FR2001/001097
(87) Numéro de publication internationale: WO 2001/079353

(56) Documents cités:
- EP-A- 0 276 512
- EP-A- 0 855 431
- US-A- 5 278 231
- US-A- 5 650 466
- US-A- 5 965 666

## Description

La présente invention concerne des compositions polymériques thermoplastiques qui présentent une bonne stabilité dimensionnelle ainsi qu'une bonne résistance aux chocs et dont les surfaces présentent une bonne peignabilité. Elles peuvent être employées pour la fabrication de pièces moulées destinées à différents types d'équipements électriques ainsi que pour la fabrication de pièces destinées à l'industrie automobile.

Le polyamide est un polymère qui est résistant chimiquement, qui est stable à des températures élevées et qui peut être mélangé à d'autres types de polymères pour constituer des mélanges dont le moulage est facilité et qui sont plus résistants aux chocs. Les polyamides aliphatiques ou aromatiques sont incompatibles ou, au mieux, faiblement compatibles avec des polymères tels que les copolymères et les polymères greffés de styrène avec des esters acryliques, acrylonitriles ou leurs semblables. Cette absence de compatibilité peut être comprise comme étant une impossibilité de mélanger les polymères, ce qui peut donner des compositions hétérogènes, qui tendent à se séparer en leurs phases constitutives et présentent des problèmes de séparation des composants lorsqu'elles sont injectées ou extrudées.

Afin d'éviter cette séparation et pour améliorer la compatibilité des composants du mélange, il est connu d'ajouter au mélange des composés polymériques, comportant le plus souvent des fonctions anhydride maléique greffées.

On a décrit de très nombreuses solutions pour la compatibilisation du polyamide et des copolymères greffés styrèniques comme l'ABS. Les compositions ainsi décrites présentent des caractéristiques intéressantes au regard de certaines propriétés. Le brevet US 5965666 décrit par exemple des compositions comprenant du polyamide, un copolymère de type ABS, et un couple de copolymères compatibilisants : le styrène-maléimide greffé par de l'anhydride maléique et le styrène-éthylène-butylène-styrène greffé par de l'anhydride maléique.

Malgré les progrès effectués, on cherche toujours à proposer de nouvelles compositions dont les propriétés sont améliorées et/ou dont les coûts sont maîtrisés. Les propriétés qui sont en général visées sont la résilience, la rigidité, la température de déformation sous charge, la stabilité dimensionnelle, l'aspect de surface, la peignabilité.

La présente invention a ainsi pour objet de proposer d'autres compositions présentant des propriétés ou un compromis de propriétés convenables pour les usages envisagés.

A cet effet, la présente invention propose une composition polymérique thermoplastique comportant les composants suivants :
(A) 1 à 97 % en poids par rapport au poids total de la composition d'un polyamide.
(B) 1 à 97 % en poids par rapport au poids total de la composition d'un copolymère comprenant un caoutchouc sur lequel sont greffés de l'acrylonitrile et un composé styrènique choisi parmi le styrène et l'α-méthyl-styrène, le copolymère comprenant 10 à 90 % en poids de caoutchouc.
(C) 0,5 à 97 % en poids par rapport au poids total de la composition d'un copolymère styrène-maléimide greffé avec des groupements fonctionnels choisis parmi les acides carboxyliques et l'anhydride d'acide.
(D) 0,5 à 97 % en poids par rapport au poids total de la composition d'un copolymère styrène-maléimide non greffé
(E) 0 à 50 % d'un agent modificateur de la résilience.
(F) 0 à 50 % en poids d'un copolymère styrène-éthylène-butylène-styrène greffé par de l'anhydride maléique.

Les compositions selon l'invention, après avoir été mises en forme par exemple par moulage, ont une bonne résistance aux chocs, une bonne stabilité dimensionnelle, due à une faible rétention de l'humidité, et une température de déformation élevée.

Ces mélanges comprennent de 1 à 97 % en poids par rapport au poids total du mélange d'un ou plusieurs polyamides (A) semi-cristallins. Les polyamides pouvant être utilisés pour la réalisation de l'invention sont obtenus par polycondensation des aminoacides ou lactames, tel que le polyamide 6. On préfère tout particulièrement le polyamide 6, le polyamide 11, le polyamide 12, le copolyamide 6/6.36, les mélanges et copolymères à base de ces polyamides ou copolyamides.

La proportion en poids de polyamide dans la composition est de préférence comprise entre 30 et 70 %.

Le composé (B) est un copolymère comprenant un caoutchouc naturel ou synthétique sur lequel sont greffés de l'acrylonitrile et un composé styrènique choisi parmi le styrène et l'α-méthyl-styrène. Le copolymère contient de préférence entre 10 et 90 % en poids de caoutchouc.

Le caoutchouc est de préférence choisi dans le groupe constitué par le polybutadiène, le caoutchouc butadiène-styrène, le caoutchouc butadiène-acrylate, le caoutchouc butadiène-acrylonitrile, l'EPR (caoutchouc d'éthylène-propylène) et l'EPDM (caoutchouc d'éthylène-propylène-diène) ou des mélanges de deux ou de plus de deux de ces caoutchoucs. La teneur en caoutchouc de l'ensemble du copolymère (B) est de préférence de 20 à 40 % en poids.

Le copolymère greffé (B) peut être préparé de la manière habituelle, par exemple par polymérisation en masse, en solution ou en suspension. Il est également possible de combiner deux ou plus de deux de ces méthodes de polymérisation pour réaliser, par exemple, la polymérisation en masse en solution, la polymérisation en masse en suspension ou la polymérisation en émulsion-suspension. La polymérisation est de préférence réalisée en présence de substances habituelles, telles que des donneurs de radicaux libres, facultativement en combinaison avec un système redox, des agents régulateurs de chaîne, des agents stabilisants, des agents de mise en suspension, des émulsifiants et analogues.

Selon un mode de réalisation préférentiel de l'invention, le composé (B) est un copolymère acrylonitrile-butadiène-styrène (ABS). Il peut être éventuellement greffé ou fonctionnalisé. Sa concentration peut varier de 1 à 97 % en poids, de préférence de 20 à 40 % en poids, par rapport au poids total du mélange.

Le composant (C) est un copolymère styrène-maléimide greffé avec des groupements fonctionnels choisis parmi les acides carboxyliques et les anhydrides d'acide. Par copolymère styrène-maléimide, on entend un polymère présentant des motifs issus du styrène et des motifs maléimides de formule (I) 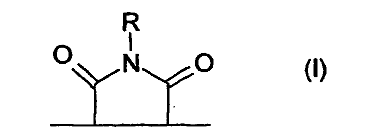 dans laquelle R est choisi parmi l'hydrogène, les radicaux alkyles, les radicaux aromatiques ou arylaromatiques. R est par exemple un groupement phényle. Le motif maléimide peut par exemple être choisi parmi le N-phénymaléimide, le N-(o-méthylphényle maléimide), le N-(m-méthylphényle maléimide), le N-(p-méthylphényle maléimide). De tels copolymères peuvent par exemple être obtenus par copolymérisation de styrène et d'anhydride maléique puis réaction partielle avec une amine, par exemple l'aniline pour former les motifs maléimides à partir des motifs anhydrides. Les motifs anhydrides n'ayant pas réagi avec l'amine constituent la fonctionnalisation.

Le composant (D) est un copolymère styrène-maléimide non greffé. Par copolymère styrène-maléimide, on entend un polymère présentant des motifs issus du styrène et des motifs de formule (I) 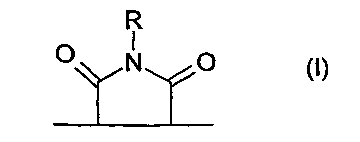 dans laquelle R est choisi parmi l'hydrogène, les radicaux alkyles, les radicaux aromatiques ou arylaromatiques. R est par exemple un groupement phényle. De tels copolymères peuvent par exemple être obtenus par copolymérisation de styrène et d'anhydride maléique puis réaction totale avec une amine, par exemple l'aniline pour former les motifs maléimides à partir des motifs anhydrides.

La proportion en groupements maléimides dans les composés (C) et (D) est de préférence comprise entre 5 et 50%.

La proportion en poids des groupements fonctionnels greffés sur le copolymère styrène-maléimide, par rapport au poids total de copolymère styrène-maléimide présent dans la composition, est comprise entre 0,1 et 3%.

Les compositions peuvent comporter un agent modificateur de la résilience (E), en proportion inférieure ou égale à 50% en poids. Selon une caractéristique préférentielle de l'invention cet agent est un élastomère ou un polymère caoutchouteux, de préférence greffé avec des groupements fonctionnels choisis parmi les acides carboxyliques et les anhydrides d'acide. Le greffage de fonctions anhydride d'acide des copolymères est généralement obtenu par copolymérisation en présence d'anhydride maléique.

Les polymères caoutchouteux pouvant être utilisés en tant qu'agents modificateurs de la résilience sont définis comme ayant un module de traction ASTM D-638 inférieur à environ 40000 MPa, généralement inférieur à 25000, et de préférence, inférieur à 20000. Il peut s'agir de copolymères statistiques ou séquencés. Des polymères caoutchouteux utiles peuvent être préparés à partir de monomères réactifs qui peuvent faire partie des chaînes ou ramifications du polymère, ou être greffés sur le polymère. Ces monomères réactifs peuvent être des diènes, des acides carboxyliques, et leurs dérivés, tels que des esters et des anhydrides. Parmi ces polymères caoutchouteux, on citera des polymères de butadiène, des copolymères de butadiène/styrène, l'isoprène, le chloroprène, des copolymères d'acrylonitrile/butadiène, l'isobutylène, des copolymères d'isobutylène-butadiène, des copolymères d'éthylène/propylène (EPR), des copolymères d'éthylène/propylène/diène (EPDM). Comme polymères caoutchouteux utiles, on peut citer des monomères vinyliques aromatiques, des oléfines, l'acide acrylique, l'acide méthacrylique et leurs dérivés, des monomères d'éthylène-propylène-diène, et leurs sels métalliques. Des polymères caoutchouteux utiles sont décrits dans les brevets US-A-4315086 et 4174358.

Un premier agent modificateur de la résilience préféré pour la réalisation de l'invention est un copolymère greffé qui est un copolymère d'éthylène et d'une alpha-oléfine autre que l'éthylène, ayant une fonctionnalité comme des fonctions carboxyliques ou anhydrides, greffée sur le copolymère d'éthylène. L'éthylène et l'α-oléfine sont de préférence un copolymère d'éthylène et d'une α-oléfine sélectionnée parmi une α-oléfine comprenant de 3 à 8 atomes de C, et de préférence, de 3 à 6 atomes de C. On préfère le propylène comme monomère d'α-oléfine dans le copolymère. D'autres α-oléfines, telles que le 1-butène, le 1-pentène, et le 1-hexène, peuvent être utilisées à la place ou en plus du propylène dans les copolymères. Pour la mise en oeuvre de l'invention selon un mode préférentiel, on peut citer les caoutchoucs éthylène-propylène greffés par de l'anhydride maléique et les caoutchoucs éthylène-propylène-diènes greffés par l'anhydride maléique.

Les compositions peuvent comporter un copolymère (F), en proportion inférieure ou égale à 50% en poids. Le copolymère (F) est un copolymère oléfine-styrène ayant un poids moléculaire compris entre 8.000 et 12.000 g/mol, greffé avec des groupements dérivés d'acides carboxyliques tels que carboxylates, anhydrides, etc. Ce type de copolymère est commercialement disponible. On cite plus particulièrement le copolymère styrène-éthylène-butylène-styrène modifié avec de l'anhydride maléique (SEBS - G - AM). La proportion en poids en copolymère (F) dans la composition est avantageusement comprise entre 0,5 et 10%. Elle est de préférence inférieure à 5%.

La proportion en poids de polyamide dans la composition est avantageusement supérieure à la proportion en poids du composé (B). Elle est de préférence comprise entre 30 et 70%. Selon une autre caractéristique préférentielle de l'invention, la somme des proportions en poids en composés (C) et (D) est inférieure à la proportion en poids en polyamide.

Selon un mode de réalisation particulièrement avantageux les proportions en poids des différents composés dans la composition sont les suivantes :
- 30 à 70% de polyamide (A)
- 20 à 40 % de composé (B)
- 5 à 20% de composé (C)
- 1 à 10% de composé (D)
- 0 à 20% de composé (E)
- 0,5 à 10% de composé (F)

Ces pourcentages sont donnés par rapport à la totalité des composants (A), (B), (C), (D), (E) et (F) présents dans la composition.

Les compositions peuvent contenir des charges minérales, telles que le talc, le kaolin, le mica, le quartz, etc et/ou des charges fibreuses comme la fibre de verre ou de carbone, etc. Elles peuvent aussi contenir des additifs tels que des stabilisants thermiques ou des produits contre les dégradations dues à la lumière, à l'oxydation, des ignifugeants, des lubrifiants, des pigments, par exemple du noir de carbone.

Les compositions selon l'invention présentent une excellente compatibilisation entre le polyamide et le copolymère Acrylonitrile-Butadiène-Styrène.

Les compositions peuvent être réalisées par mélange en fondu des composés, par exemple à l'aide d'un dispositif d'extrusion.

Les articles obtenus par mise en forme de ces compositions présentent d'excellentes propriétés mécaniques, ainsi qu'une excellente peignabilité.

D'autres détails ou avantages de l'invention apparaîtront plus clairement au vu des exemples donnés ci-dessous uniquement à titre indicatif.

### Composés utilisés:

Composé A1: un polyamide 6 de viscosité relative (acide sulfurique, norme ISO 307) de 3,0, commercialisé par la société Hyosung Corporation sous la référence Toplamid 1021.
Composé B1: Copolymère Acrylonitrile-Butadiène-Styrène commercialisé par la société Kumho Chemical sous la référence ABS 795.
Composé C1: Copolymère Styrène-Maleimide fonctionnalisé par de l'anhydride maléique, commercialisé par la société Nippon Shokubaï sous la référence PSX 0371.
Composé D1: Copolymère Styrène-Maleimide non fonctionnalisé, commercialisé par la société Nippon Shokubaï sous la référence PAS 1460.
Composé E1: Caoutchouc Ethylène-Propylène fonctionnalisé par de l'anhydride maléique commercialisé par la société Mitsui Chemical sous la référence MP 0620.
Composé F1: Copolymère Styrène-éthylène-butylène-styrène fonctionnalisé par de l'anhydride maléique commercialisé par la société Shell sous la référence FG1901X.

### Evaluations

- résistance à la traction selon la norme ASTM D-638 après conditionnement de l'éprouvette à 23°C et une humidité relative de 50 %
- allongement à la rupture selon la norme ASTM D-638.
- module selon la norme D-790.
- résistance aux chocs IZOD selon la norme D-256, sous des impacts de 3,2t et 6,4t.
- Température de déformation sous charge (HDT) selon la norme ASTM D 648, sous charge de 4,6 kg/cm² et de 18,5 kg/cm².

### Exemples

Les compositions sont obtenues par mélange en extrudeuse bi-vis de type WERNER et PFLEIDERER ZSK. Les conditions d'extrusion sont les suivantes:
- Température: entre 240 et 280°C
- Vitesse de rotation: entre 200 et 300 tours/min
- Débit: entre 25 et 30 kg/heure

Les compositions réalisées sont détaillées dans le tableau I. Les proportions sont indiquées en pourcentages en poids dans la composition.

**Tableau I**

| Composé | Exemple 1 | Exemple 2 (comparatif) |
|---|---|---|
| A1 | 42% | 42% |
| B1 | 35% | 35% |
| C1 | 10% | 15% |
| D1 | 5% | / |
| E1 | 6% | 6% |
| F1 | 2% | 2% |

Les propriétés sont mentionnées dans le tableau II

**Tableau II**

| Propriété | Exemple 1 | Exemple 2 |
|---|---|---|
| Résistance à la traction (kgf/cm²) | 515 | 529 |
| Allongement à la rupture (%) | 170 | 148 |
| Module de flexion (kgf/cm²) | 21000 | 22000 |
| Résistance aux chocs Izod sous impact de 3,2 t (kgf.cm/cm) | 105 | 92 |
| Résistance aux chocs Izod sous impact de 6,4 t (kgf.cm/cm) | 90 | 62 |
| HDT sous charge de 4,6 kgf/cm² (°C) | 120 | 122 |
| HDT sous charge de 18,5 kgf/cm² (°C) | 98 | 104 |

## Revendications

1. Composition polymérique thermoplastique comportant les composés suivants:
(A) 1à 97% en poids par rapport au poids total de la composition d'un polyamide.
(B) 1 à 97% en poids par rapport au poids total de la composition d'un copolymère comprenant un caoutchouc sur lequel sont greffés de l'acrylonitrile et un composé styrènique choisi parmi le styrène et l'α-méthyl-styrène, le copolymère comprenant 10 à 90% en poids de caoutchouc.
(C) 0,5 à 97% en poids par rapport au poids total de la composition d'un copolymère styrène-maléimide greffé avec des groupements fonctionnels choisis parmi les acides carboxyliques et les anhydrides d'acide.
(D) 0,5 à 97% en poids par rapport au poids total de la composition d'un copolymère styrène-maléimide non greffé
(E) 0 à 50% d'un agent modificateur de la résilience.
(F) 0 à 50% en poids d'un copolymère styrène-éthylène-butylène-styrène greffé par de l'anhydride maléique.

2. Composition selon la revendication 1 **caractérisée en ce que** le copolymère (B) est un copolymère Acrylonitrile-Styrène-Butadiène.

3. Composition selon la revendication 2 **caractérisée en ce que** l'agent modificateur de la résilience est un élastomère.

4. Composition selon la revendication 3 **caractérisée en ce que** l'élastomère est un élastomère greffé avec des groupements fonctionnels choisis parmi les acides carboxyliques et les anhydrides d'acide.

5. Composition selon l'une des revendications précédentes, **caractérisée en ce que** les groupements fonctionnels greffés des copolymères sont obtenus par copolymérisation en présence d'anhydride maléique.

6. Composition selon l'une des revendications précédentes, **caractérisée en ce que** la proportion en poids des groupements fonctionnels greffés sur le copolymère styrène-maléimide, par rapport au poids total de copolymère styrène-maléimide présent dans la composition, est comprise entre 0,1% et 3%.

7. Composition selon l'une des revendications précédentes, **caractérisée en ce que** les groupements maléimides présents dans les copolymères (C) et (D) sont des groupements phényl-maléimide.

8. Composition selon l'une des revendications précédentes, **caractérisée en ce que** l'agent modificateur de la résilience est choisi parmi le caoutchouc éthylène-propylène greffé par de l'anhydride maléique, le caoutchouc éthylène-propylène-diène greffé par de l'anhydride maléique, les polyéthylènes greffés par de l'anhydride maléique, le polypropylène greffé par de l'anhydride maléique.

9. Composition selon l'une des revendications précédentes, **caractérisée en ce que** le polyamide est choisi parmi le polyamide 6, le polyamide 11, le polyamide 12, le copolyamide 6/6.36, les mélanges et copolymères à base de ces polyamides et copolyamides.

10. Composition selon l'une des revendications précédentes, **caractérisée en ce que** la proportion en poids en polyamide est supérieure à la proportion en poids en copolymère (B).

11. Composition selon l'une des revendications précédentes, **caractérisée en ce que** la proportion en poids en polyamide est supérieure à la somme des proportions en composés (C) et (D).

12. Composition selon l'une des revendications précédentes, **caractérisée en ce que** les proportions en poids des composés sont les suivantes :
- 30 à 70% de polyamide (A)
- 20 à 40 % de composé (B)
- 5 à 20% de composé (C)
- 1 à 10% de composé (D)
- 0 à 20% de composé (E)
- 0,5 à 10% de composé (F)

## Patentansprüche

1. Thermoplastische polymere Zusammensetzung, die die folgenden Verbindungen umfasst:
(A) 1 bis 97 Gew.-%, bezogen auf das Gesamtgewicht der Zusammensetzung, eines Polyamids.
(B) 1 bis 97 Gew.-%, bezogen auf das Gesamtgewicht der Zusammensetzung, eines Copolymers umfassend einen Kautschuk, auf den Acrylnitril und eine Styrolverbindung, ausgewählt aus Styrol und α-Methylstyrol, gepfropft sind, wobei das Copolymer 10 bis 90 Gew.-% Kautschuk umfasst.
(C) 0,5 bis 97 Gew.-%, bezogen auf das Gesamtgewicht der Zusammensetzung, eines Styrol-Maleimid-Copolymers, das mit funktionellen Gruppen, ausgewählt aus Carboxylsäuren und Säureanhydriden, gepfropft ist.
(D) 0,5 bis 97 Gew.-%, bezogen auf das Gesamtgewicht der Zusammensetzung, eines nicht gepfropften Styrol-Maleimid-Copolymers.
(E) 0 bis 50 % eines Schlagzähigkeits-modifizierenden Mittels.
(F) 0 bis 50 Gew.-% eines Styrol-Ethylen-Butylen-Styrol-Copolymers, das mit Maleinsäureanhydrid gepfropft ist.

2. Zusammensetzung nach Anspruche 1, **dadurch gekennzeichnet, dass** das Copolymer (B) ein Acrylnitril-Styrol-Butadien-Copolymer ist.

3. Zusammensetzung nach Anspruch 2, **dadurch gekennzeichnet, dass** das Schlagzähigkeits-modifizierende Mittel ein Elastomer ist.

4. Zusammensetzung nach Anspruch 3, **dadurch gekennzeichnet, dass** das Elastomer ein Elastomer ist, das mit funktionellen Gruppen gepfropft ist, die aus Carboxylsäuren und Säureanhydriden ausgewählt sind.

5. Zusammensetzung nach einem der vorhergehenden Ansprüche, **dadurch gekennzeichnet, dass** die auf die Copolymere gepfropften funktionellen Gruppen durch Copolymerisation in Gegenwart von Maleinsäureanhydrid erhalten werden.

6. Zusammensetzung nach einem der vorhergehenden Ansprüche, **dadurch gekennzeichnet, dass** der Gewichtsanteil der auf das Styrol-Maleimid-Copolymer gepfropften funktionellen Gruppen, bezogen auf das Gesamtgewicht von in der Zusammensetzung vorhandenem Styrol-Maleimid-Copolymer, zwischen 0,1 % und 3 % liegt.

7. Zusammensetzung nach einem der vorhergehenden Ansprüche, **dadurch gekennzeichnet, dass** die in den Copolymeren (C) und (D) vorhandenen Maleimidgruppen Phenylmaleimidgruppen sind.

8. Zusammensetzung nach einem der vorhergehenden Ansprüche, **dadurch gekennzeichnet, dass** das Schlagzähigkeits-modifizierende Mittel aus Ethylen-Propylen-Kautschuk, gepfropft mit Maleinsäureanhydrid, Ethylen-Propylen-DienKautschuk, gepfropft mit Maleinsäureanhydrid, Polyethylenen, gepfropft mit Maleinsäureanhydrid, Polypropylen, gepfropft mit Maleinsäureanhydrid, ausgewählt ist.

9. Zusammensetzung nach einem der vorhergehenden Ansprüche, **dadurch gekennzeichnet, dass** das Polyamid aus Polyamid 6, Polyamid 11, Polyamid 12, Copolyamid 6/6.36, den Gemischen und Copolymeren auf der Basis dieser Polyamide und Copolyamide ausgewählt ist.

10. Zusammensetzung nach einem der vorhergehenden Ansprüche, **dadurch gekennzeichnet, dass** der Gewichtsanteil an Polyamid über dem Gewichtsanteil an Copolymer (B) liegt.

11. Zusammensetzung nach einem der vorhergehenden Ansprüche, **dadurch gekennzeichnet, dass** der Gewichtsanteil an Polyamid über der Summe der Anteile der Verbindungen (C) und (D) liegt.

12. Zusammensetzung nach einem der vorhergehenden Ansprüche, **dadurch gekennzeichnet, dass** die Gewichtsanteile der Verbindungen die folgenden sind:
- 30 bis 70 % Polyamid (A)
- 20 bis 40 % Verbindung (B)
- 5 bis 20 % Verbindung (C)
- 1 bis 10 % Verbindung (D)
- 0 bis 20 % Verbindung (E)
- 0,5 bis 10 % Verbindung (F)

## Claims

1. Thermoplastic polymeric composition comprising the following compounds:
(A) from 1 to 97% by weight, with respect to the total weight of the composition, of a polyamide,
(B) from 1 to 97% by weight, with respect to the total weight of the composition, of a copolymer containing a rubber onto which are grafted acrylonitrile and a styrenic compound chosen from styrene and α-methylstyrene, the copolymer containing from 10 to 90% by weight of rubber,
(C) from 0.5 to 97% by weight, with respect to the total weight of the composition, of a styrene-maleimide copolymer grafted with functional groups chosen from carboxylic acids and acid anhydrides,
(D) from 0.5 to 97% by weight, with respect to the total weight of the composition, of an ungrafted styrene-maleimide copolymer,
(E) from 0 to 50% of an impact modifier.
(F) from 0 to 50% by weight of a maleic-anhydride-grafted styrene-ethylene-butylene-styrene copolymer.

2. Composition according to Claim 1, **characterized in that** the copolymer B is an acrylonitrile-styrene-butadiene copolymer.

3. Composition according to Claim 2, **characterized in that** the impact modifier is an elastomer.

4. Composition according to Claim 3, **characterized in that** the elastomer is an elastomer grafted with functional groups chosen from carboxylic acids and acid anhydrides.

5. Composition according to one of the preceding claims, **characterized in that** the grafted functional groups of the copolymers are obtained by copolymerization in the presence of maleic anhydride.

6. Composition according to one of the preceding claims, **characterized in that** the proportion by weight of the functional groups grafted onto the styrene-maleimide copolymer, with respect to the total weight of styrene-maleimide copolymer present in the composition, is between 0.1 and 3%.

7. Composition according to one of the preceding claims, **characterized in that** the maleimide groups present in the copolymers (C) and (D) are phenylmaleimide groups.

8. Composition according to one of the preceding claims, **characterized in that** the impact modifier is chosen from maleic-anhydride-grafted ethylene-propylene rubber, maleic-anhydride-grafted ethylene-propylene-diene rubber, maleic-anhydride-grafted polyethylenes, and maleic-anhydride-grafted polypropylene.

9. Composition according to one of the preceding claims, **characterized in that** the polyamide is chosen from among nylon-6, nylon-11, nylon-12, the copolyamide nylon-6/6,36, and mixtures and copolymers based on these polyamides and copolyamides.

10. Composition according to one of the preceding claims, **characterized in that** the proportion of polyamide by weight is greater than the proportion of copolymer (B) by weight.

11. Composition according to one of the preceding claims, **characterized in that** the proportion of polyamide by weight is greater than the total of the proportions of compounds (C) and (D).

12. Composition according to one of the preceding claims, **characterized in that** the proportions of the compounds by weight are the following:
- 30 to 70% of polyamide (A)
- 20 to 40% of compound (B)
- 5 to 20% of compound (C)
- 1 to 10% of compound (D)
- 0 to 20% of compound (E)
- 0.5 to 10% of compound (F)
